# EUROPEAN PATENT APPLICATION

(11) **EP 4 535 939 A1**
(43) Date of publication of application: **09.04.2025**
(21) Application number: 23816271.3
(22) Date of filing: 19.05.2023
(51) Int. Cl.: H05K 5/00, H05K 5/02, H04M 1/02, G02B 5/02

(54) **HOUSING AND ELECTRONIC DEVICE COMPRISING HOUSING**

(30) Priority: 03.06.2022 KR 20220068350; 04.07.2022 KR 20220082053
(71) Applicant: Samsung Electronics Co., Ltd., Suwon-si, Gyeonggi-do 16677 (KR)
(72) Inventor: SHIN, Wanju, Suwon-si Gyeonggi-do 16677 (KR); PARK, Gijae, Suwon-si Gyeonggi-do 16677 (KR); CHOI, Jongmun, Suwon-si Gyeonggi-do 16677 (KR); CHOI, Hyunsuk, Suwon-si Gyeonggi-do 16677 (KR)
(74) Representative: HGF
(86) International application number: PCT/KR2023/006869
(87) International publication number: WO 2023/234609

(57) **Abstract**

An electronic device is provided. The electronic device comprises: a housing; and a processor disposed in the housing. The housing may comprise: a glass part including a first glass surface visually exposed to the outside of the housing and a concave-convex pattern formed on the first glass surface; and a reflective layer including a first surface which is a reflective layer disposed on the concave-convex pattern and formed to correspond to the shape of the concave-convex pattern and covers at least a part of the concave-convex pattern, and a second surface oriented to the outside of the housing and spaced a designated distance away from the first surface.

## Description

### [Technical Field]

The disclosure relates to a housing and an electronic device including the housing.

### [Background Art]

With the development of information and communication technology and semiconductor technology, various functions are packed in one portable electronic device. For example, an electronic device may implement not only communication functions but also entertainment functions, such as playing games, multimedia functions, such as playing music and videos, communication and security functions for mobile banking, and scheduling and e-wallet functions. These electronic devices have been downsized to be conveniently carried by users.

As a recent trend is stressing on making portable electronic devices small, slim, and portable, ongoing research efforts are being made to giving a more aesthetic look to the electronic device.

### [Detailed Description of the Invention]

### [Technical Problem]

There is a growing design need to improve the aesthetics of electronic devices. For example, an electronic device may include a housing with a pearl effect or a glitter effect implemented using a pearl pigment applied to the surface of the housing. However, the surface of the housing painted with the pearl pigment may have an increased surface roughness due to the pearl pigment, thereby reducing user convenience. When a pearl pigment having a relatively small particle size is used to reduce the surface roughness, the glitter effect may be reduced.

As another example, the electronic device may include a housing that implements a pearl effect or a glitter effect using a polymer film coated or printed with paint. However, due to the polymer film, the production cost of the housing may increase, and the thickness of the housing may increase.

According to various embodiments of the disclosure, there may be provided an electronic device that implements a glitter effect using an irregular pattern and a reflective layer positioned on the irregular pattern.

The disclosure is not limited to the foregoing embodiments but various modifications or changes may rather be made thereto without departing from the spirit and scope of the disclosure.

### [Technical Solution]

According to various embodiments of the disclosure, an electronic device may comprise a housing, and a processor disposed in the housing. The housing may include a glass including a first glass surface visually exposed to an outside of the housing and an irregular pattern formed on the first glass surface, and a reflective layer disposed on the irregular pattern and formed to correspond to a shape of the irregular pattern, the reflective layer including a first surface covering at least a portion of the irregular pattern and a second surface facing the outside the housing and spaced apart from the first surface by a designated distance.

According to various embodiments of the disclosure, a housing may comprise a glass including a first glass surface visually exposed to an outside of the housing and an irregular pattern formed on the first glass surface, and a reflective layer disposed on the irregular pattern and formed to correspond to a shape of the irregular pattern, the reflective layer including a first surface covering at least a portion of the irregular pattern and a second surface facing the outside the housing and spaced apart from the first surface by a designated distance.

According to various embodiments of the disclosure, a method for manufacturing a housing may comprise preparing a glass including an irregular pattern, depositing a reflective layer on the irregular pattern of the glass, and polishing the housing.

### [Advantageous Effects]

According to various embodiments of the disclosure, the electronic device may include a housing including an irregular pattern and a reflective layer disposed on the irregular pattern. Due to the irregularity pattern and reflective layer, the housing may provide a glitter effect.

Other various effects may be provided directly or indirectly in the disclosure.

### [Brief Description of the Drawings]

FIG. 1 is a block diagram illustrating an electronic device in a network environment according to various embodiments of the disclosure;
FIG. 2 is a front perspective view illustrating an electronic device according to various embodiments of the disclosure;
FIG. 3 is a rear perspective view illustrating an electronic device according to various embodiments of the disclosure;
FIG. 4 is an exploded perspective view illustrating an electronic device according to various embodiments of the disclosure; and
FIGS. 5A and 5B are views illustrating a rear plate according to various embodiments;
FIG. 6 is a cross-sectional view taken along line A-A' of FIG. 5A according to various embodiments of the disclosure;
FIG. 7 is a flowchart illustrating a process of manufacturing a housing according to various embodiments of the disclosure;
FIG. 8A is an enlarged view of a housing before a polishing process according to an embodiment of the disclosure, and FIG. 8B is an enlarged view of a housing after a polishing process of the housing of FIG. 8A;
FIG. 9A is an enlarged view of a housing before a polishing process according to another embodiment of the disclosure, and FIG. 9B is an enlarged view of a housing after a polishing process of the housing of FIG. 9A;
FIG. 10 is a view illustrating a housing including a plurality of reflective layers according to an embodiment;
FIG. 11 is a view illustrating a housing including a plurality of reflective layers according to another embodiment of the disclosure;
FIGS. 12A, 12B, and 12C are views illustrating a process of manufacturing a housing including a plurality of reflective layers'
FIGS. 13A, 13B, and 13C are views illustrating a housing including a rear irregular pattern according to various embodiments of the disclosure;
FIG. 14 is a view illustrating an electronic device including a polymer film and a color layer according to various embodiments;
FIG. 15 is a view illustrating an electronic device including a deposition layer according to various embodiments of the disclosure; and
FIGS. 16A and 16B are views illustrating an electronic device including a rear irregular pattern according to various embodiments of the disclosure.

### [Mode for Carrying out the Invention]

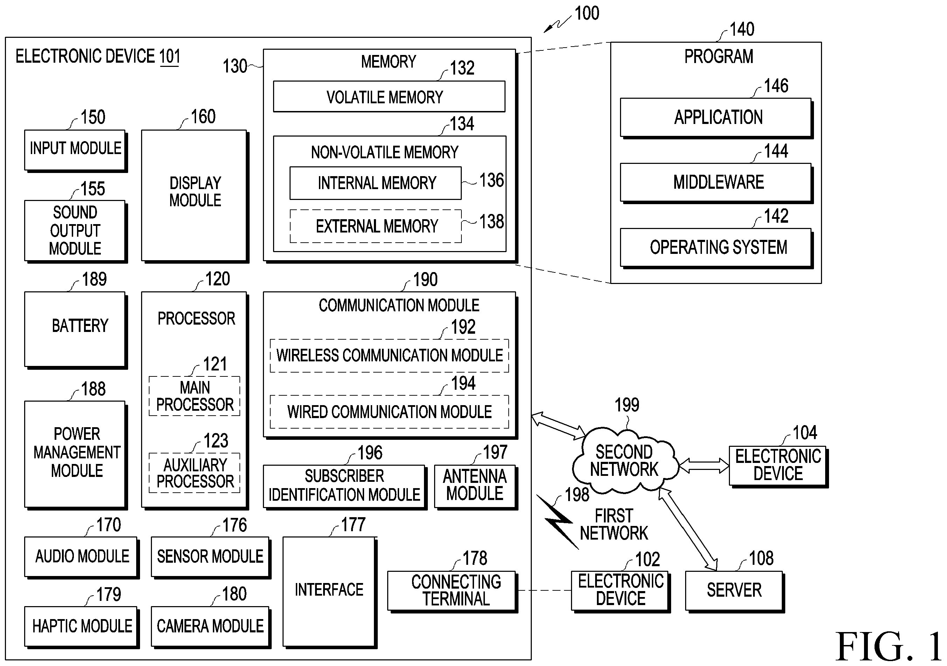

FIG. 1 is a block diagram illustrating an electronic device in a network environment according to various embodiments of the disclosure.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via a first network 198 (e.g., a short-range communication network, such as BluetoothTM, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. **In** such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

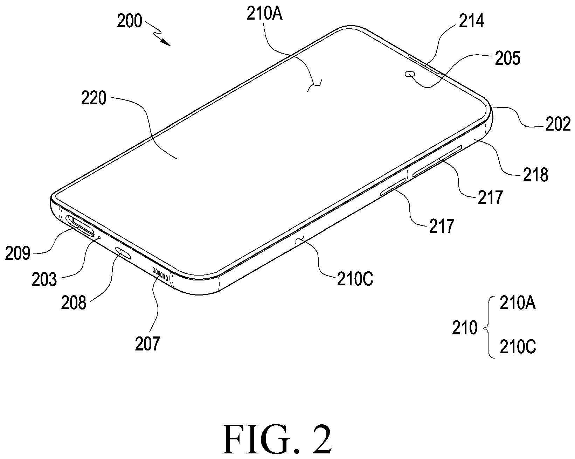

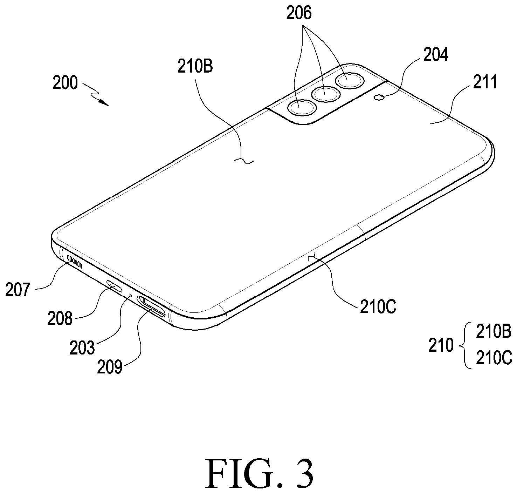

FIG. 2 is a front perspective view illustrating an electronic device according to various embodiments of the disclosure. FIG. 3 is a rear perspective view illustrating an electronic device according to various embodiments of the disclosure.

Referring to FIGS. 2 and 3, according to an embodiment, an electronic device 200 may include a housing 210 with a front surface 210A, a rear surface 210B, and a side surface 210C surrounding a space between the front surface 210A and the rear surface 210B. According to another embodiment (not shown), the housing 210 may denote a structure forming part of the front surface 210A, the rear surface 210B, and the side surface 210C of FIG. 2. For example, the housing 210 may include a front plate 202 and a rear plate 211. According to an embodiment, at least part of the front surface 210A may have a substantially transparent front plate 202 (e.g., a glass plate or polymer plate including various coat layers). The rear surface 210B may be formed by a rear plate 211. The rear plate 211 may be formed of, e.g., glass, ceramic, polymer, metal (e.g., titanium (Ti), stainless steel (STS), aluminum (Al), or magnesium (Mg)), or a combination of at least two thereof. The side surface 210C may be formed by a side bezel structure (or a "side member") 218 that couples to the front plate 202 and the rear plate 211 and includes a metal and/or polymer. According to an embodiment, the rear plate 211 and the side bezel plate 218 may be integrally formed together and include the same material (e.g., glass, metal, such as aluminum, or ceramic). According to another embodiment, the front surface 210A and/or the front plate 202 may be interpreted as a part of the display 220.

According to an embodiment, the electronic device 200 may include at least one of a display 220, audio modules 203, 207, and 214 (e.g., the audio module 170 of FIG. 1), a sensor module (e.g., the sensor module of FIG. 1). 176), camera modules 205 and 206 (e.g., the camera module 180 of FIG. 1), a key input device 217 (e.g., the input module 150 of FIG. 1), and connector holes 208 and 209 (e.g., the connection terminal 178 of FIG. 1). According to an embodiment, the electronic device 200 may exclude at least one (e.g., the connector hole 209) of the components or may add other components. According to an embodiment, the display 220 may be visually revealed through, e.g., a majority portion of the front plate 202.

According to an embodiment, the surface (or the front plate 202) of the housing 210 may include a screen display area formed as the display 220 is visually exposed. For example, the screen display area may include the front surface 210A.

According to an embodiment, the electronic device 200 may include a recess or opening formed in a portion of the screen display area (e.g., the front surface 210A) of the display 220 and may include at least one or more of an audio module 214, a sensor module (not shown), a light emitting device (not shown), and a camera module 205 aligned with the recess or opening. According to another embodiment (not shown), at least one or more of the audio module 214, sensor module (not shown), camera module 205, fingerprint sensor (not shown), and light emitting device (not shown) may be included on the rear surface of the screen display area of the display 220.

According to an embodiment, the display 220 may be coupled with or disposed adjacent to a touch detection circuit, a pressure sensor capable of measuring the strength (pressure) of touches, and/or a digitizer for detecting a magnetic field-type stylus pen.

According to an embodiment, the audio modules 203, 207, and 214 may include, e.g., a microphone hole 203 and speaker holes 207 and 214. A microphone for acquiring external sounds may be disposed in the microphone hole 203. **In** some embodiments, a plurality of microphones may be disposed to detect the direction of the sound. The speaker holes 207 and 214 may include an external speaker hole 207 and a phone receiver hole 214. **In** an embodiment, the speaker holes 207 and 214 and the microphone hole 203 may be implemented as a single hole, or speakers may be included without the speaker holes 207 and 214 (e.g., piezo speakers).

According to an embodiment, the sensor modules (not shown) may generate an electrical signal or data value corresponding to an internal operating state or external environmental state of the electronic device 200. The sensor module (not shown) may include, e.g., a first sensor module (not shown) (e.g., a proximity sensor) and/or a second sensor module (not shown) (e.g., a fingerprint sensor) disposed on the front surface 210A of the housing 210. The sensor module (not shown) may include a third sensor module (not shown) (e.g., an HRM sensor) and/or a fourth sensor module (not shown) (e.g., a fingerprint sensor) disposed on the rear surface 210B of the housing 210). In an embodiment (not shown), the fingerprint sensor may be disposed on the rear surface 210B as well as on the front surface 210A (e.g., the display 220) of the housing 210. The electronic device 200 may further include sensor modules not shown, e.g., at least one of a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor (not shown).

According to an embodiment, the camera modules 205 and 206 may include a front camera module 205 disposed on the first surface 210A of the electronic device 200 and a rear camera module 206 and/or a flash 204 disposed on the rear surface 210B. The camera modules 205 and 206 may include one or more lenses, an image sensor, and/or an image signal processor. The flash 204 may include, e.g., a light emitting diode (LED) or a xenon lamp. According to an embodiment, two or more lenses (an infrared (IR) camera, a wide-angle lens, and a telephoto lens) and image sensors may be disposed on one surface of the electronic device 200.

According to an embodiment, the key input device 217 may be disposed on the side surface 210C of the housing 210. According to an embodiment, the electronic device 200 may exclude all or some of the above-mentioned key input devices 217 and the excluded key input devices 217 may be implemented in other forms, e.g., as soft keys, on the display 220. According to an embodiment, at least a portion of the key input device 217 may be disposed on the side bezel structure 218.

According to an embodiment, the light emitting device may be disposed on, e.g., the front surface 210A of the housing 210. The light emitting device (not illustrated) may provide, e.g., information about the state of the electronic device 200 in the form of light. According to another embodiment, the light emitting device (not shown) may provide a light source that interacts with, e.g., the front camera module 205. The light emitting device (not illustrated) may include, e.g., a light emitting diode (LED), an infrared (IR) LED, and/or a xenon lamp.

According to an embodiment, the connector holes 208 and 209 may include a first connector hole 208 for receiving a connector (e.g., an earphone jack) for transmitting/receiving audio signals to/from an external electronic device or a connector (e.g., a USB connector) for transmitting/receiving power and/or data to/from the external electronic device and/or a second connector hole 209 for receiving a storage device (e.g., a subscriber identification module (SIM) card). According to an embodiment, the first connector hole 208 and/or the second connector hole 209 may be omitted.

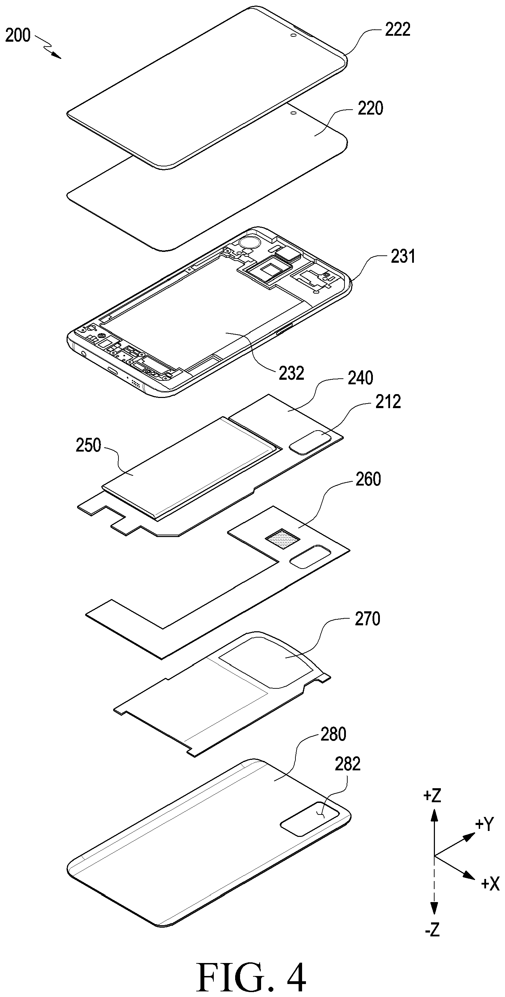

FIG. 4 is an exploded perspective view illustrating an electronic device according to various embodiments of the disclosure.

Referring to FIG. 4, an electronic device 200 (e.g., the electronic device 200 of FIGS. 2 and 3) may include at least one of a front plate 222 (e.g., the front plate 202 of FIG. 2), a display 220. (e.g., the display 220 of FIG. 2), a bracket 232 (e.g., a front supporting member), a printed circuit board 240, a battery 250, a rear case 260 (e.g., a rear supporting member), an antenna 270, and a rear plate 280 (e.g., the rear plate 211 of FIG. 3). According to an embodiment, the electronic device 200 may omit at least one (e.g., the rear case 260) of the components or may add other components. At least one of the components of the electronic device 200 may be the same or similar to at least one of the components of the electronic device 200 of FIG. 2 or 3 and no duplicate description is made below.

According to an embodiment, the bracket 232 may be disposed inside the electronic device 200 to be connected with the side bezel structure 231 or integrated with the side bezel structure 231. The bracket 232 may be formed of, e.g., a metal and/or non-metallic material (e.g., polymer). The bracket 232 may receive the display 220 on one surface and the printed circuit board 240 on the other surface. A processor (e.g., the processor 120 of FIG. 1), memory (e.g., the memory 130 of FIG. 1), and/or an interface (e.g., the interface 177 of FIG. 1) may be mounted on the printed circuit board 240.

According to an embodiment, the battery 250 may be a device for supplying power to at least one component (e.g., the camera module212) of the electronic device 200. The battery 250 may include, e.g., a primary cell which is not rechargeable, a secondary cell which is rechargeable, or a fuel cell. At least a portion of the battery 250 may be disposed on substantially the same plane as the printed circuit board 240. The battery 250 may be integrally or detachably disposed inside the electronic device 200.

According to an embodiment, the rear case 260 may be disposed between the printed circuit board 240 and the antenna 270. For example, the rear case 260 may include one surface to which at least one of the printed circuit board 240 and the battery 250 is coupled, and another surface to which the antenna 270 is coupled.

According to an embodiment, the antenna 270 may be disposed between the rear plate 280 and the battery 250. The antenna 270 may include, e.g., a near-field communication (NFC) antenna, a wireless charging antenna, and/or a magnetic secure transmission (MST) antenna. The antenna 270 may perform short-range communication with, e.g., an external device or may wirelessly transmit or receive power necessary for charging. For example, the antenna 270 may include a coil for wireless charging. According to an embodiment, an antenna structure may be formed by a portion or combination of the side bezel structure 231 and/or the bracket 232.

According to various embodiments, the electronic device 200 may include a camera module 212 disposed in the second housing (e.g., the housing 210 of FIG. 2). According to an embodiment, the camera module 212 may be disposed on the bracket 232 and may be a rear camera module (e.g., the camera module 212 of FIG. 3) capable of obtaining an image of a subject positioned behind (e.g., the -Z direction) of the electronic device 200. According to an embodiment, at least a portion of the camera module 212 may be exposed to the outside of the electronic device 200 through the opening 282 formed in the rear plate 280.

The electronic device 200 disclosed in FIGS. 2 to 4 has a bar-type or plate-type appearance but the disclosure is not limited thereto. For example, the illustrated electronic device may be a rollable electronic device or a foldable electronic device. "Rollable electronic device" may mean an electronic device at least a portion of which may be wound or rolled or received in a housing (e.g., the housing 210 of FIG. 2) as the display (e.g., the display 220 of FIG. 4) may be bent and deformed. As the display is stretched out or is exposed to the outside in a larger area according to the user's need, the rollable electronic device may use an expanded second display area.

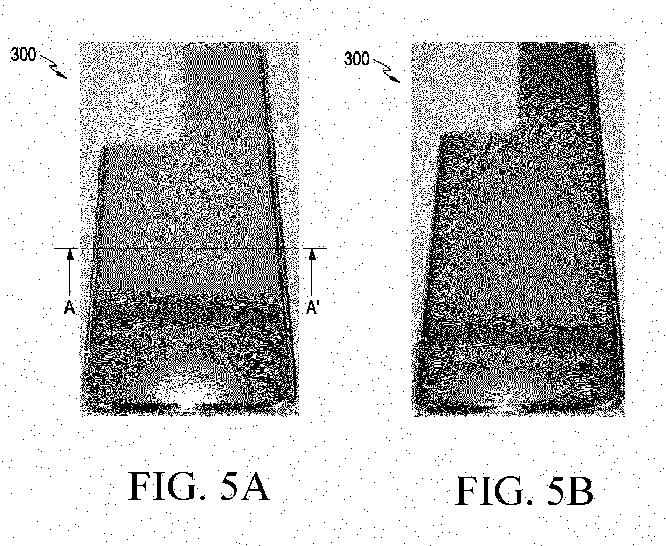

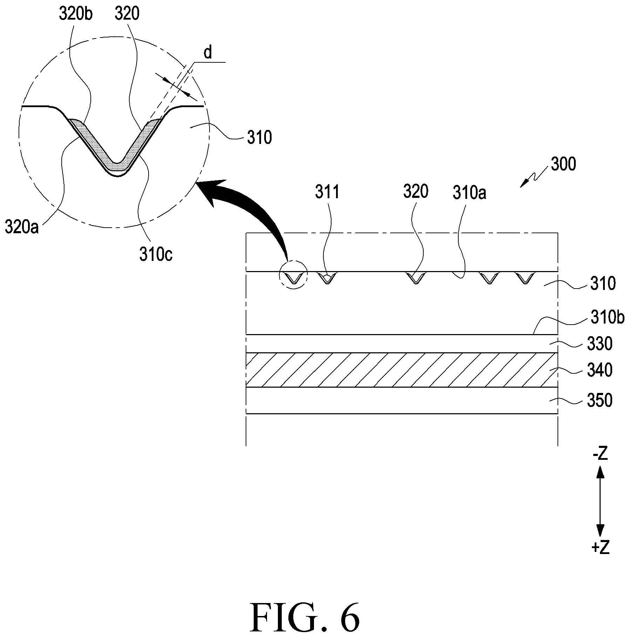

FIGS. 5A and 5B are perspective views illustrating a rear plate according to various embodiments of the disclosure. FIG. 6 is a cross-sectional view of FIG. 5A according to various embodiments of the disclosure.

Referring to FIGS. 5A, 5B, and 6, a housing 300 may include a glass 310 and a reflective layer 320. The configuration of the housing 300 of FIGS. 5A, 5B, and/or 6 may be identical in whole or part to the configuration of the rear plate 280 of FIG. 4.

According to various embodiments, the glass 310 may form at least a portion of the exterior of the electronic device (e.g., the electronic device 200 of FIG. 2). For example, the glass 310 may include a first glass surface 310a facing the outside of the electronic device 200. According to an embodiment, the first glass surface 310a may be exposed to the outside of the electronic device 200. According to an embodiment, the housing 300 may include an anti-fingerprint coating layer 305 disposed on the first glass surface 310a. The anti-fingerprint coating layer 305 may have a material for reducing attachment of contaminants to the housing 300. According to an embodiment, the glass 310 may be replaced with a plate formed of ceramic. For example, the glass 310 may include alumina, zirconia, or silicon.

According to various embodiments, the glass 310 may include an irregular pattern 311. According to an embodiment, the irregular pattern 311 may be referred to as a plurality of grooves or recesses formed in the first glass surface 310a of the glass 310. According to an embodiment, at least a portion of light passing through the glass 310 may be scattered due to the irregular pattern 311. For example, the irregular pattern 311 may enhance the haze level. According to an embodiment, the irregular pattern 311 may be irregularly formed.

According to an embodiment, the glass 310 may include a third glass surface 310c extending from the first glass surface 310a and forming an irregular pattern 311. The reflective layer 320 may cover at least a portion of the third glass surface 310c.

According to various embodiments, the reflective layer 320 may provide glitter and/or pearl effects. According to an embodiment, the reflective layer 320 may optically lead to an intended interference effect in a specific wavelength range. According to an embodiment, at least a portion of the light transferred to the reflective layer 320 may be reflected to provide a visual effect to the user. For example, at least a portion of the light transferred to the reflective layer 320 may be reflected, and thus at least a portion of the reflective layer 320 may be visible. According to an embodiment, at least a portion of the light transferred to the reflective layer 320 may be reflected, so that the color and/or pattern of the portion where the reflective layer 320 is positioned may be different from the color and/or pattern of the portion where the reflective layer 320 is not positioned. According to an embodiment, the reflective layer 320 may be referred to as a color layer or a deposition layer.

According to an embodiment, the color of the housing 300 may be implemented by reflecting light in a wavelength band determined by the spectroscopy of light. The degree to which light is refracted is different based on the length of the wavelength, and the color of the housing 300 may be implemented as light is dispersed due to a difference in the path of light (e.g., refraction of light). According to an embodiment, the color of the housing 300 may be implemented by dispersing at least a portion of light due to the reflective layer 320 formed to correspond to the shape of the irregular pattern 311.

According to various embodiments, the reflective layer 320 may be disposed on the glass 310. For example, the reflective layer 320 may be disposed on the irregular pattern 311 of the glass 310.

According to various embodiments, the reflective layer 320 may be formed to correspond to the shape of the irregular pattern 311. According to an embodiment, the reflective layer 320 may include a first surface 320a disposed on the irregular pattern 311 of the glass 310 and a second surface 320b spaced apart from the first surface 320a by a designated distance d. The designated distance d between the first surface 320a and the second surface 320b may be referred to as the thickness of the reflective layer 320. According to an embodiment, the reflective layer 320 may have a substantially "V" shape or a "U" shape.

According to an embodiment, the color in which light incident on the reflective layer 320 is recognized may be changed based on the distance d between the first surface 320a and the second surface 320b. For example, the color of the light reflected from the housing 300 may be changed based on the thickness at which the reflective layer 320 is deposited. According to an embodiment, the designated distance d between the first surface 320a and the second surface 320b may be 100 nm to 2000 nm. According to an embodiment, the designated distance d between the first surface 320a and the second surface 320b may be 140 nm to 300 nm. According to an embodiment, the reflective layer 320 may include a curved portion. For example, the second surface 320b of the reflective layer 320 may have a curved surface formed using a polishing process.

According to various embodiments, the reflective layer 320 may include materials having different refractive indices. For example, the reflective layer 320 may include an oxide (e.g., SiO₂) nitride (e.g., Si₃n₄ and/or SiNₓ), a metal (e.g., Sn, In), and/or a nonmetal (Si). According to an embodiment, the reflective layer 320 may have a plurality of stacked structures according to a desired color. The reflective layer 320 may include an oxide, nitride, metal and/or nonmetal that are stacked. According to an embodiment, the reflective layer 320 may include nitride. According to an embodiment, the reflective layer 320 may include nitrides and oxides that are repeatedly stacked. According to an embodiment, the reflective layer 320 may include a nitride, an oxide, and a metal and/or a nonmetal positioned between the nitride and the oxide. According to an embodiment, the transmittance of the reflective layer 320 including the metal and/or the nonmetal positioned between the nitride and the oxide may be relatively reduced. For example, as the proportion of the metal and/or nonmetal included in the reflective layer 320 increases, the brightness of the reflective layer 320 may decrease. According to an embodiment, the color of the housing 300 may be changed based on the material of the reflective layer 320. However, the color of the housing 300 illustrated in FIGS. 5A and 5B is selective, and the housing 300 may have a color not illustrated depending on the material of the reflective layer 320.

According to an embodiment, the reflective layer 320 may include silicon dioxide (SiO₂) having a first refractive index and/or silicon nitride (Si₃N₄) having a second refractive index higher than the first refractive index. According to an embodiment, silicon dioxide and silicon nitride may be formed by reacting with plasma gas. According to an embodiment, the designated distance d may be variously changed according to the design. For example, the thickness of the reflective layer 320 may be changed based on the power, flow rate, and/or pressure of the sputtering process. For example, the thickness of the reflective layer 320 may be changed based on the material, power, flow rate, and/or pressure of the reflective layer 320 as shown in Table 1 below. According to an embodiment, the thickness of the reflective layer 320 may be variously changed according to the design of the housing 300. According to an embodiment, the reflective layer 320 may include a high hardness material. For example, the reflective layer 320 may include silicon nitride Si₃N₄.

**[Table 1]**

| Materials | Thickness (nm) | First sputtering | | Second sputtering | | | Pressure (Pa) |
|---|---|---|---|---|---|---|---|
| | | Power (Kw) | Argon flow rate (sccm) | Power (Kw) | Oxygen flow rate (sccm) | Nitrogen flow rate (sccm) | |
| Si₃N | 50 | 16 | 480 | 1.5 | - | 450 | 3.50*10⁻¹ |
| SiO₂ | 87 | 13.5 | 600 | 2 | 450 | - | 7.50*10⁻¹ |
| Si₃N | 60 | 16 | 480 | 1.5 | - | 450 | 3.50*10⁻¹ |
| SiO₂ | 20 | 13.5 | 600 | 2 | 450 | - | 7.50*10⁻¹ |
| Si₃N | 100 | 16 | 480 | 1.5 | - | 450 | 3.50*10⁻¹ |
| SiO₂ | 50 | 13.5 | 600 | 2 | 450 | - | 7.50*10⁻¹ |
| Si₃N | 80 | 16 | 480 | 1.5 | - | 450 | 3.50*10⁻¹ |

According to various embodiments, the housing 300 may include an adhesive layer 330 disposed on the glass 310 (e.g., in the +Z direction). For example, the adhesive layer 330 may be connected to or bonded to the second glass surface 310b. According to an embodiment, the adhesive layer 330 may be substantially transparent. For example, the adhesive layer 330 may include at least one of an optically clear resin (OCR) or an optically clear adhesive (OCA). For example, the material of the adhesive layer 330 may be changed considering light transmittance and/or strength. According to various embodiments, the housing 300 may include a polymer film 340 supporting the adhesive layer 330. For example, the adhesive layer 330 may be disposed between the glass 310 and the polymer film 340. According to an embodiment, the polymer film 340 may include polyethylene terephthalate (PET). According to an embodiment, the polymer film 340 may be disposed between the shielding layer 350 and the adhesive layer 330.

According to various embodiments, the housing 300 may include a shielding layer 350. According to an embodiment, the shielding layer 350 may prevent a component inside an electronic device (e.g., the electronic device 200 of FIG. 4) from being visually exposed to the outside of the electronic device 200.

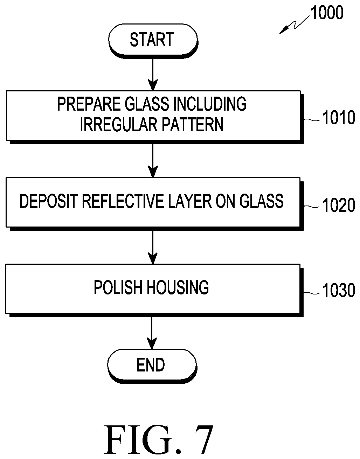

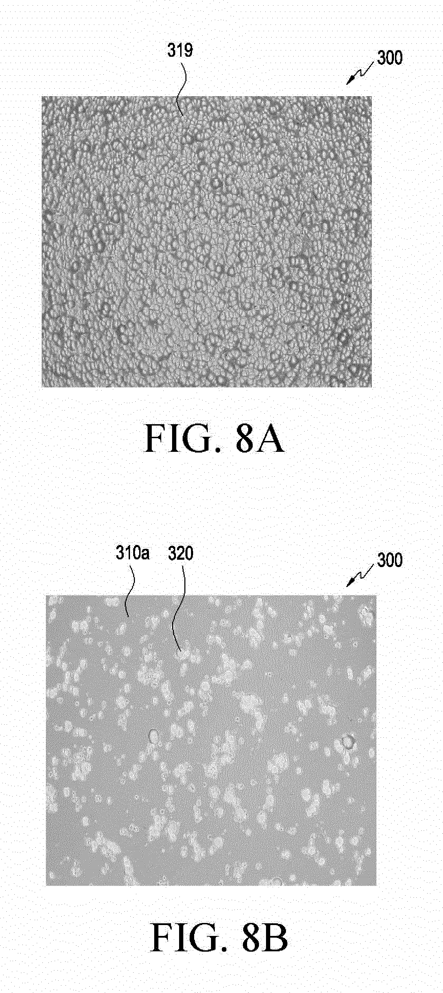

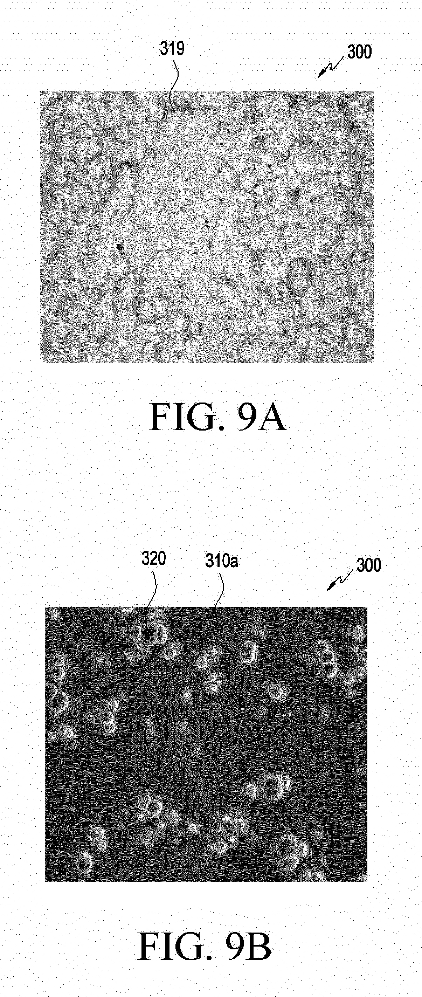

FIG. 7 is a flowchart illustrating a process of manufacturing a housing according to various embodiments of the disclosure. FIG. 8A is an enlarged view of a housing before a polishing process according to an embodiment of the disclosure. FIG. 8B is an enlarged view of a housing after a polishing process of the housing of FIG. 8A. FIG. 9A is an enlarged view of a housing before a polishing process according to another embodiment of the disclosure. FIG. 9B is an enlarged view of a housing after a polishing process of the housing of FIG. 9A.

Referring to FIG. 7, a manufacturing process 1000 of a housing may include an operation 1010 of preparing a glass (e.g., the glass 310 of FIG. 6) including an irregular pattern (e.g., the irregular pattern 311 of FIG. 6), an operation 1020 of depositing a reflective layer (e.g., the reflective layer 320 of FIG. 6) on the glass 310, and an operation 1030 of polishing the housing (e.g., the housing 300 of FIG. 6). According to an embodiment, the manufacturing process 1000 of the housing may be interpreted as part of the manufacturing process of the electronic device (e.g., the electronic device 200 of FIG. 2).

According to various embodiments, in operation 1010 of preparing the glass 310 including the irregular pattern 311, the irregular pattern 311 may be randomly formed on the glass 310 using a cutting process. According to an embodiment, the irregular pattern 311 may be formed using a wet etching process. For example, the irregular pattern 311 may be formed on the first glass surface 310a of the glass 310 using a solution using hydrofluoric acid or ammonium fluoride. According to an embodiment, the irregular pattern 311 may be formed using a dry blasting process. According to an embodiment, at least a portion (e.g., the first glass surface 310a) of the glass 310 may be formed to be substantially flat using a polishing process.

According to various embodiments, in operation 1020 of depositing the reflective layer 320 on the glass 310, the reflective layer 320 may be disposed on the irregular pattern 311 of the glass 310 using a deposition process. According to an embodiment, by the deposition process 1020, the housing 300 may have a surface 319 where the surface of the glass 310 before polishing and/or the reflective layer 320 is exposed. The surface 319 may be referred to as a post-etching and/or pre-polishing surface of the housing 300. According to an embodiment, the housing 300 of FIGS. 8A and 9A may be a housing 300 in which the reflective layer 320 is deposited on the glass 310, and may be the housing 300 in which the deposition process 1020 is performed.

According to various embodiments, the reflective layer 320 may be disposed on the irregular pattern 311 of the glass 310 by a deposition process. For example, the reflective layer 320 may be deposited on the irregular pattern 311 using a vacuum deposition method (e.g., a sputtering process). According to an embodiment, the sputtering process may be a high-frequency inductively coupled plasma (ICP) process. The high-frequency inductively coupled plasma process may be a process in which a material deposited (e.g., sputtered) on positive ions (e.g., argon (Ar) ions) is deposited on the glass 310 and then reacts with plasma gas in the plasma light source to be formed of oxide or nitride. An inert gas may be used as the positive ions.

According to various embodiments, the operation 1030 of polishing the housing 300 may be an operation of polishing the glass 310 and the reflective layer 320. For example, the glass 310 and the reflective layer 320 may be polished using a brush or a slurry. According to an embodiment, the depth at which the housing 300 is polished may be variously changed according to the design of the housing 300. For example, the depth at which the housing 300 is polished may be changed based on the material of the brush, the pressure transferred to the housing 300, the time of the polishing operation, and/or the type of the slush. According to an embodiment, the brush may include nylon or pig hair. According to an embodiment, the slurry may include cerium oxide (CeO₂). According to an embodiment, the polishing operation 1030 may be performed using annular polishing, inline polishing, and/or belt polishing. The housing 300 of FIGS. 8B and 9B may be a housing in which the polishing operation 1030 is performed.

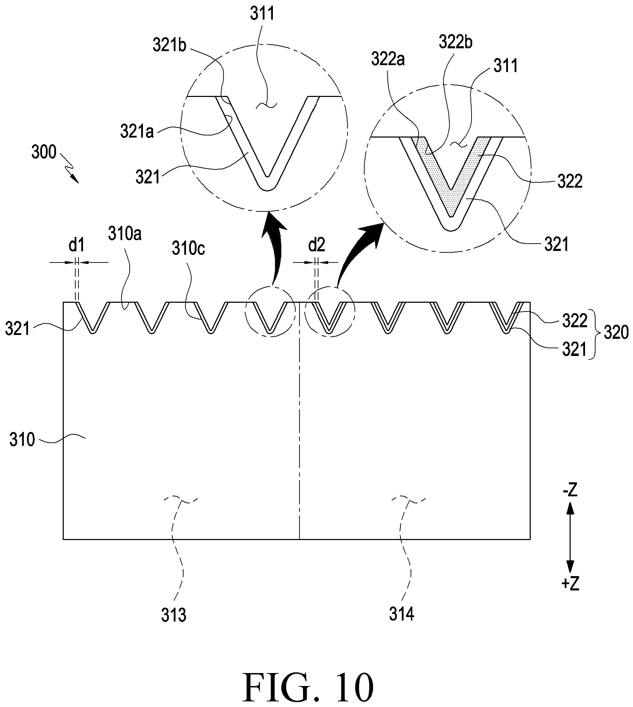

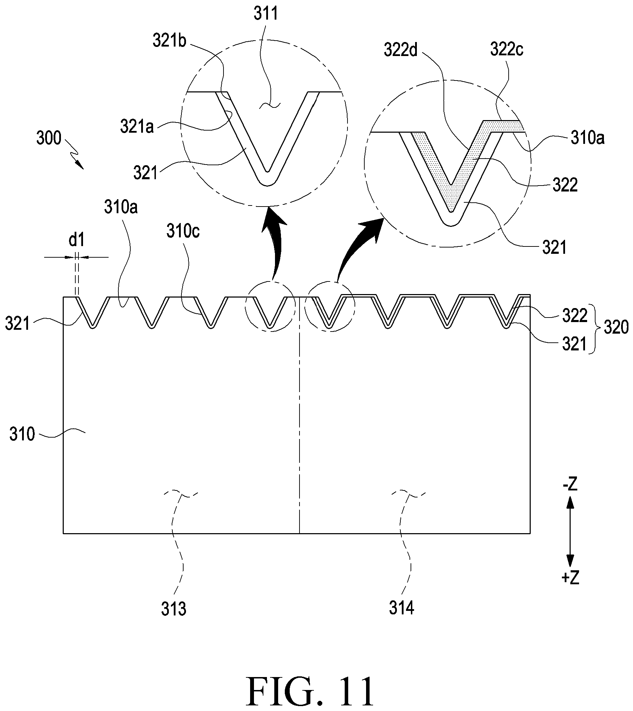

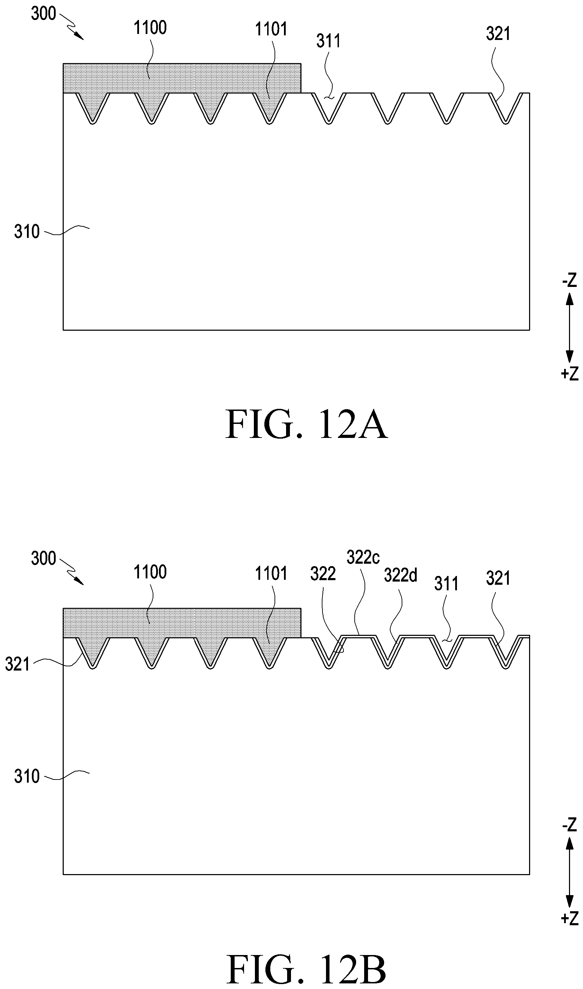

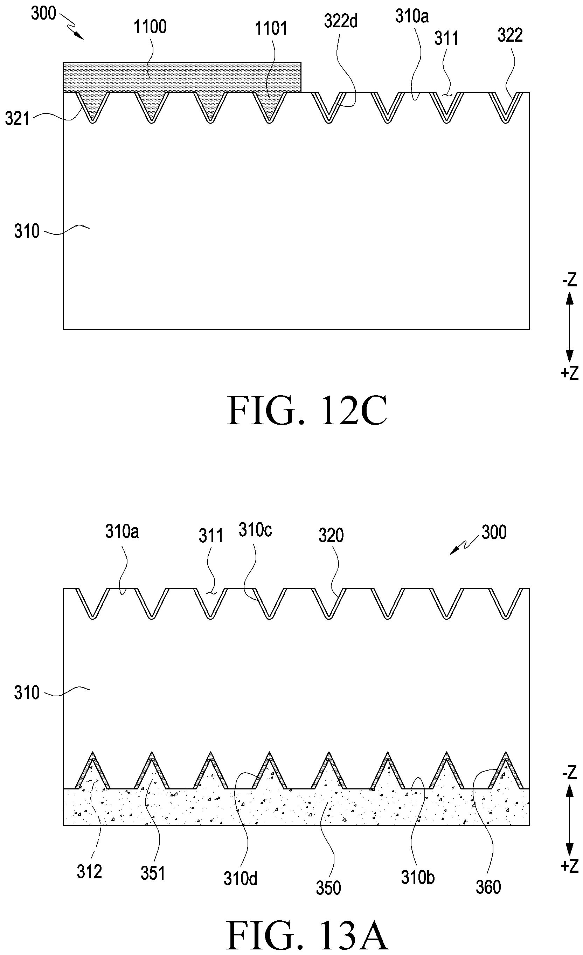

FIG. 10 is a view illustrating a housing including a plurality of reflective layers according to an embodiment. FIG. 11 is a view illustrating a housing including a plurality of reflective layers according to another embodiment of the disclosure. FIGS. 12A, 12B, and 12C are views illustrating a process of manufacturing a housing including a plurality of reflective layers.

Referring to FIGS. 10, 11, 12A, 12B, and 12C, the housing 300 may include a glass 310 and a reflective layer 320 disposed on the irregular pattern 311 of the glass 310. The reflective layer 320 may include a plurality of reflective layers (e.g., the first reflective layer 321 and the second reflective layer 322). The configuration of the glass 310 and the reflective layer 320 of FIGS. 10, 11, 12A, 12B, and 12C may be identical in whole or part to the configuration of the glass 310 and the reflective layer 320 of FIG. 6.

According to various embodiments, the reflective layer 320 may include a plurality of reflective layers 321 and 322. For example, the reflective layer 320 may include a first reflective layer 321 disposed on the glass 310 and a second reflective layer 322 disposed on the first reflective layer 321. According to an embodiment, the first reflective layer 321 may be deposited on the glass 310, and the second reflective layer 322 may be deposited on the first reflective layer 321. According to an embodiment, at least a portion of the first reflective layer 321 may be disposed in the irregular pattern 311 of the glass 310. For example, the first reflective layer 321 may include a 1-1th surface 321a disposed on the glass 310 and a 1-2th surface 321b opposite to the 1-1th surface 321a. The second reflective layer 322 may be disposed on the 1-2th surface 321b of the first reflective layer 321. For example, the second reflective layer 322 may include a 2-1th surface 322a facing the first reflective layer 321 and a 2-2th surface 322b opposite to the 2-1th surface 322a. In the disclosure, the first reflective layer 321 and the second reflective layer 322 have been described as different structures formed using separate processes, but are not limited thereto. For example, the first reflective layer 321 and the second reflective layer 322 may be interpreted as one reflective layer 320. For example, one reflective layer 320 may include areas or portions having different thicknesses, shapes, surface roughnesses, and/or materials, and some of the areas or portions having different thicknesses, shapes, surface roughnesses, and/or materials may be referred to as a first reflective layer 321 or a second reflective layer 322, and others may be referred to as a first reflective layer 321 and a second reflective layer.

According to various embodiments, the housing 300 may have a different refractive index for each portion. For example, the glass 310 may include a first area 313 where the first reflective layer 321 is positioned and a second area 314 where the first reflective layer 321 and the second reflective layer 322 are positioned.

According to various embodiments, the refractive index of the first area 313 and the refractive index of the second area 314 may be different.

According to an embodiment, the material of the first reflective layer 321 may be different from the material of the second reflective layer 322. According to an embodiment, the hardness of the second reflective layer 322 may be higher than the hardness of the first reflective layer 321. For example, the second reflective layer 320 may include silicon nitride (Si₃N₄), and the first reflective layer 321 may include silicon dioxide (SiO₂). According to an embodiment, the thickness of the reflective layer positioned in the first area 313 may be different from the thickness of the reflective layer positioned in the second area 314. For example, one reflective layer (e.g., the first reflective layer 321) may be positioned in the first area 313, and a plurality of reflective layers (e.g., the first reflective layer 321 and the second reflective layer 322) may be positioned in the second area 314. According to an embodiment, as the plurality of reflective layers 321 and 322 are deposited in the second area 314, the second thickness d2 of the plurality of reflective layers 321 and 322 positioned in the second area 314 may be larger than the first thickness d1 of the reflective layer (e.g., the first reflective layer 321) positioned in the first area 313. According to an embodiment, the first reflective layer 321 may be visually exposed to the outside of the housing 300 in the first area 313 of the glass 310, and the second reflective layer 322 may be visually exposed to the outside of the housing 300 in the second area 314 of the glass 310. According to an embodiment, due to the difference in refractive index, the color and/or glitter effect displayed in the first area 313 may be different from the color and/or glitter effect displayed in the second area 314.

According to an embodiment, the thickness of the reflective layer 320 may be different for each portion. In the polishing process (e.g., process 1030 of FIG. 7), the first area of the reflective layer 320 may be polished by a first length, and the second area different from the first area may be polished by a second length different from the first length. For example, the second area may have a larger amount of polishing than the first area, so that the thickness of the second area may be smaller than the thickness of the first area. According to an embodiment, the second area may be interpreted as a portion of the reflective layer 320 where the first reflective layer 321 or the second reflective layer 322 is positioned, and the first area thicker than the second area may be interpreted as a portion of the reflective layer 320 where the first reflective layer 321 and the second reflective layer 322 are positioned.

According to an embodiment, the shape of the reflective layer 320 may be different for each portion. For example, the reflective layer 320 may have a shape corresponding to the shape of the irregular pattern 311. According to an embodiment, the shape of the reflective layer 320 positioned in the first area 313 may be different from the shape of the reflective layer 320 positioned in the second area 314. The shape of the irregular pattern 311 may be different for each portion. For example, the shape of the irregular pattern 311 positioned in the first area 313 may be different from the shape of the irregular pattern 311 positioned in the second area 314. According to an embodiment, the cast for forming the irregular pattern 311 may have a different shape (e.g., a "U" shape and/or a "V" shape) for each portion.

According to an embodiment, the surface roughness of the reflective layer 320 (e.g., the arithmetic average roughness Ra of the irregular pattern 311) may be different for each portion. For example, the surface roughness of the reflective layer 320 may correspond to the surface roughness of the irregular pattern 311. According to an embodiment, the surface roughness of the reflective layer 320 positioned in the first area 313 and the surface roughness of the reflective layer 320 positioned in the second area 314 may be different. The surface roughness of the irregular pattern 311 may be different for each portion. For example, the surface roughness of the irregular pattern 311 positioned in the first area 313 and the surface roughness of the irregular pattern 311 positioned in the second area 314 may be different. According to an embodiment, the cast for forming the irregular pattern 311 may have different surface roughness for each portion. According to various embodiments, the second reflective layer 322 may be formed by being deposited on the glass 310 where the first reflective layer 321 is disposed. Referring to FIGS. 12A and 12B, the second reflective layer 322 may be deposited on the first reflective layer 321. For example, in the housing 300 where the mask 1100 is disposed, the second reflective layer 322 may be disposed in an area where the mask is not positioned. According to an embodiment, the mask 1100 may include a plurality of protrusions 1101 corresponding to the shape of the irregular pattern 311. According to an embodiment, a portion of the glass 310 covered by the mask 1100 so that the second reflective layer 322 is not deposited may be referred to as a first area (e.g., the first area 313 of FIG. 10), and a portion of the glass 310, not covered by the mask 1100 so that the second reflective layer 322 is deposited may be referred to as a second area (e.g., the second area 314 of FIG. 10). Referring to FIGS. 11 and 12B, at least a portion (e.g., the upper surface portion 322c) of the second reflective layer 322 may not be polished. According to an embodiment, the second reflective layer 322 may include an upper surface portion 322c disposed on the first glass surface 310a and a side surface portion 322d disposed on the first reflective layer 321. According to an embodiment, as the transmittance of light is changed by the upper surface portion 322c, the visual effect provided by the housing 300 may be changed. Referring to FIGS. 10 and 12C, the second reflective layer 322 may be polished. For example, the upper surface portion 322c of the second reflective layer 322 may be polished using a polishing process. The first glass surface 310a of the glass 310 may be visually exposed to the outside of the housing 300.

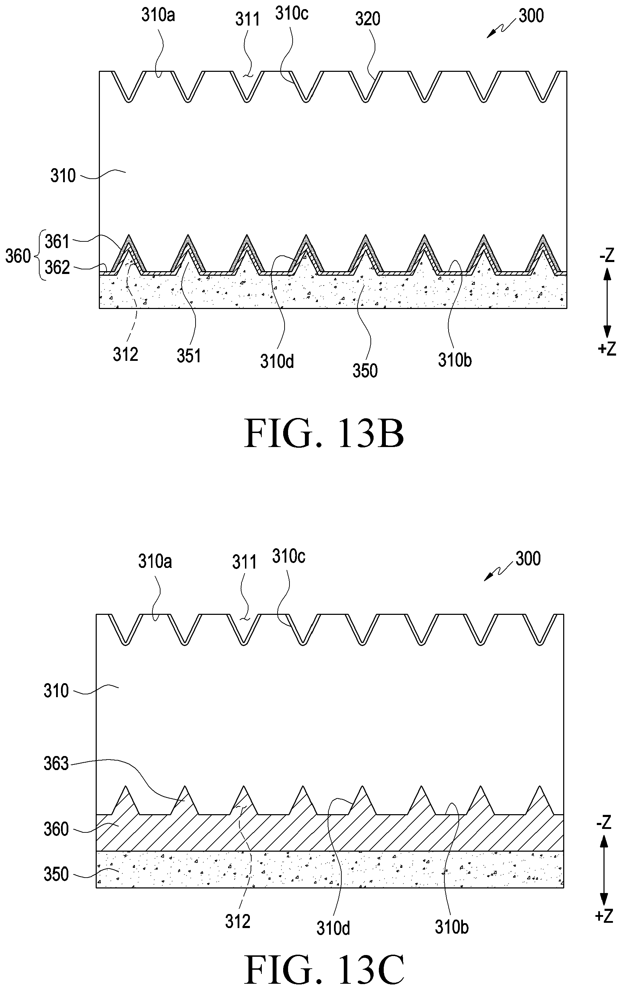

FIGS. 13A, 13B, and 13C are views illustrating a housing including a rear irregular pattern according to various embodiments of the disclosure.

Referring to FIG. 13A, FIG. 13B, and/or FIG. 13C, the housing 300 may include a glass 310, a reflective layer 320, a shielding layer 350, and/or a deposition layer 360. The configuration of the glass 310, the reflective layer 320, and the shielding layer 350 of FIGS. 13A, 13B, and/or 13C may be identical in whole or part to the configuration of the glass 310, the reflective layer 320, and the shielding layer 350 of FIG. 6.

According to various embodiments, the glass 310 may include a rear irregular pattern 312. For example, the glass 310 may include a first glass surface 310a facing the outside of the housing 300 and a second glass surface 310b opposite to the first glass surface 310a. The glass 310 may include an irregular pattern 311 formed on the first glass surface 310a and a rear irregular pattern 312 formed on the second glass surface 310b. The rear irregular pattern 312 may be referred to as a plurality of grooves or recesses formed in the second glass surface 310b of the glass 310. According to an embodiment, at least a portion of light passing through the glass 310 may be scattered due to the rear irregular pattern 312. For example, the rear irregular pattern 312 may enhance the haze value. According to an embodiment, the rear irregular pattern 312 may enhance glitter and/or pearl effects. For example, at least a portion of the light transferred to the housing 300 may be scattered by the irregular pattern 311, the rear irregular pattern 312, and the reflective layer 320. According to an embodiment, the glass 310 may include a fourth glass surface 310d extending from the second glass surface 310b and forming a rear irregular pattern 312.

Referring to FIGS. 13A and 13B, at least a portion of the shielding layer 350 may be accommodated in the rear irregular pattern 312. For example, the shielding layer 350 may include a plurality of first protruding patterns 351 accommodated in the rear irregular pattern 312. According to an embodiment, the first protruding patterns 351 may be surrounded by the fourth glass surface 310d. According to an embodiment, the deposition layer 360 may be positioned between the glass 310 and the shielding layer 350. According to an embodiment (e.g., FIG. 13B), the deposition layer 360 may include a first deposition layer 361 and a second deposition layer 362. The first deposition layer 361 may be positioned on the glass 310 (e.g., in the +Z direction), and the second deposition layer 362 may be positioned between the first deposition layer 361 and the shielding layer 350. The configuration of the deposition layer 360 may be partially identical to the configuration of the reflective layer 320. For example, the description of the first reflective layer 321 and the second reflective layer 321 may be applied to the first deposition layer 361 and the second deposition layer 362.

Referring to FIG. 13C, the deposition layer 360 may be deposited on the second glass surface 310b of the glass 310 (e.g., in the +Z direction). For example, the deposition layer 360 may be disposed under the glass 310 (e.g., in the +Z direction) using direct deposition, mirror ink including aluminum paste, and/or painting. According to an embodiment, the deposition layer 360 may be disposed between the glass 310 and the shielding layer 350. At least a portion of the deposition layer 360 may be accommodated in the rear irregular pattern 312. For example, the deposition layer 360 may include a plurality of second protruding patterns 363 surrounded by the fourth glass surface 310d. According to an embodiment, the deposition layer 360 may reflect at least a portion of the light transferred to the housing 300. For example, the deposition layer 360 may have various colors. The deposition layer 360 may be referred to as a color layer or a rear reflective layer. According to an embodiment, the configuration of the deposition layer 360 may be partially identical to the configuration of the reflective layer 320. For example, the deposition layer 360 may be referred to as a color layer or a rear reflective layer, and may be formed using deposition or evaporation using an electron beam. According to an embodiment, the deposition layer 360 may include a deposition material (e.g., hafnium oxide (HfO₂), titanium dioxide (TiO₂), niobic acid (Nb₂O₅), zirconium oxide (ZrO₂), and/or aluminum oxide (Al₂O₃)).

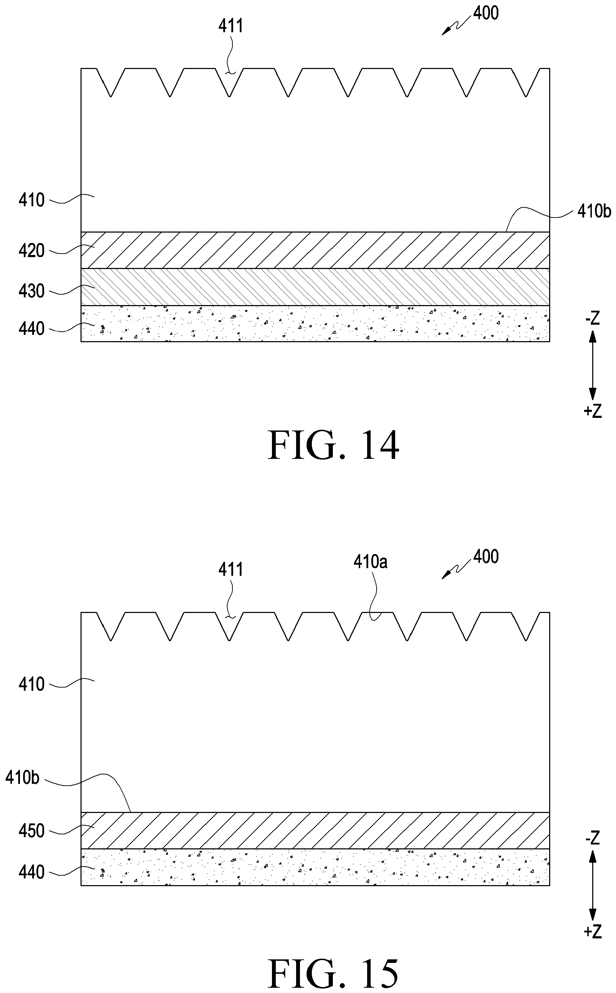

FIG. 14 is a view illustrating an electronic device including a polymer film and a color layer according to various embodiments. FIG. 15 is a view illustrating an electronic device including a deposition layer according to various embodiments of the disclosure.

Referring to FIGS. 14 and 15, the housing 400 may include a glass 410 including an irregular pattern 411, and the housing 400 may not include a reflective layer (e.g., the reflective layer 320 of FIG. 6). The configuration of the housing 400, the glass 410, the irregular pattern 411, and the shielding layer 440 of FIGS. 14 and 15 may be identical in whole or part to the configuration of the housing 300, the glass 310, the irregular pattern 311, and the shielding layer 350 of FIG. 6.

Referring to FIG. 14, the housing 400 may include a glass 410, a polymer film 420 disposed under the glass 410 (+Z direction), a color layer 430 disposed under the polymer film 420, and a shielding layer 440 disposed under the color layer 430. According to an embodiment, the color layer 430 may be a deposition layer deposited on the polymer film 420 or a mirror ink printed on the polymer film 420. According to an embodiment, the color layer 430 may be referred to as a reflective layer.

According to various embodiments, the housing 400 may provide a glitter effect or a pearl effect without the reflective layer 320 disposed in the irregular pattern 411. For example, at least a portion of the light reflected from the color layer 430 of the housing 400 may be scattered in the irregular pattern 411 of the glass 410, thereby enhancing the pearl effect and/or the glitter effect.

Referring to FIG. 15, the housing 400 may include a glass 410, a deposition layer 450 disposed under the glass 410 (+Z direction), and a shielding layer 440 disposed under the deposition layer 450. According to an embodiment, the deposition layer 450 may be a layer physically vapor deposited (PVD) on the second glass surface 410b. According to an embodiment, the deposition layer 450 may reflect at least a portion of light incident on the housing 400 through the glass 410.

According to various embodiments, the housing 400 may provide a glitter effect or a pearl effect without the reflective layer 320 disposed in the irregular pattern 411. For example, at least a portion of the light reflected from the deposition layer 450 of the housing 400 may be scattered in the irregular pattern 411 of the glass 410, thereby enhancing the pearl effect and/or the glitter effect.

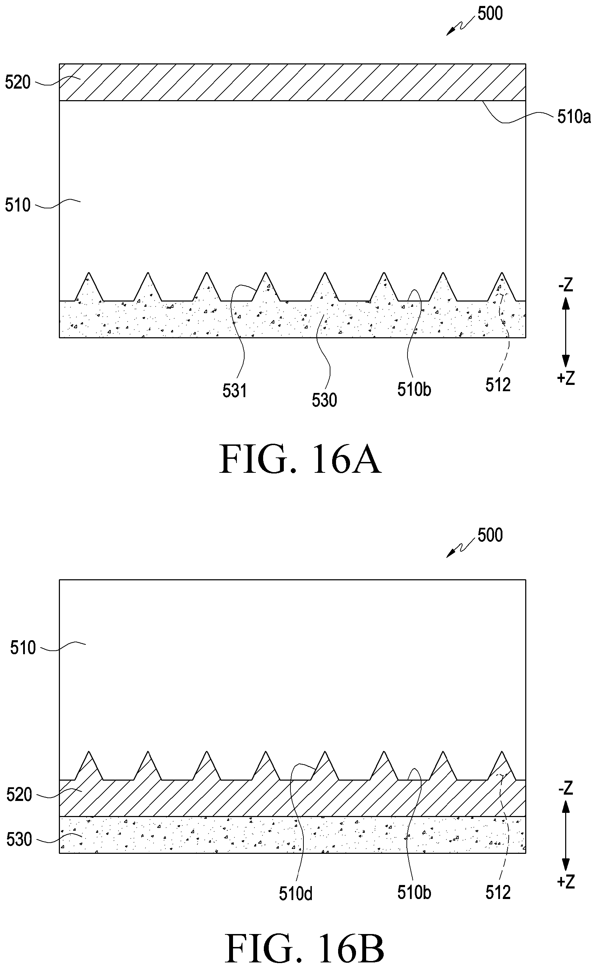

FIGS. 16A and 16B are views illustrating an electronic device including a rear irregular pattern according to various embodiments of the disclosure.

Referring to FIGS. 16A and 16B, the housing 500 may include a glass 510, a color layer 520, and a shielding layer 530. The configuration of the housing 500, the glass 510, and the shielding layer 530 of FIGS. 16A and 16B may be identical in whole or part to the configuration of the housing 300, the glass 310, and the shielding layer 350 of FIG. 6.

According to various embodiments, the glass 510 may include a first glass surface 510a facing the outside of the housing 500 and a second glass surface 510b opposite to the first glass surface 510a. According to an embodiment, the glass 510 may not include the irregular pattern (e.g., the irregular pattern 311 of FIG. 6) formed on the first glass surface 510a, but may include the rear irregular pattern 512 formed on the second glass surface 510b. The configuration of the rear irregular pattern 512 of FIGS. 16A and 16B may be identical in whole or part to the configuration of the rear irregular pattern 312 of FIGS. 13A to 13C.

According to various embodiments, the housing 500 may include a color layer 520 for expressing a color. According to an embodiment, the color layer 520 may include silicon dioxide (SiO₂), silicon nitride (Si₃N₄), and/or titanium oxide (Ti₃O₅).

Referring to FIG. 16A, the color layer 520 may include a color layer 520 disposed on the front surface (e.g., the first glass surface 510a) of the glass 510. For example, the color layer 520 may be a layer physically vapor-deposited on the first glass surface 510a. According to an embodiment, the glass 510 may be disposed between the color layer 520 and the shielding layer 530. According to an embodiment, at least a portion of the light transferred to the housing 500 may be reflected from the protruding pattern 531 of the shielding layer 530 accommodated in the rear irregular pattern 512, so that the pattern and/or color expressed by the housing 500 may be changed. Referring to FIG. 16B, the color layer 520 may include a color layer 520 disposed on the rear surface (e.g., the second glass surface 510b) of the glass 510. For example, the color layer 520 may be a layer physically vapor-deposited on the second glass surface 510b. According to an embodiment, the color layer 520 may reflect at least a portion of light incident on the housing 500 through the glass 510. According to an embodiment, the housing 500 may provide a glitter effect or a pearl effect without a reflective layer (e.g., the reflective layer 320 of FIG. 6) disposed in the rear irregular pattern 312. For example, at least a portion of the light reflected from the color layer 520 of the housing 500 may be scattered in the rear irregular pattern 512 of the glass 510, thereby enhancing the pearl effect and/or the glitter effect.

According to various embodiments of the disclosure, an electronic device (e.g., the electronic device 200 of FIG. 2) may comprise a housing **(e.g., the electronic device 210 of** **FIG. 2****)** and a processor (e.g., the processor 120 of FIG. 1) disposed in the housing. The housing may include a glass (e.g., the glass 310 of FIG. 6) including a first glass surface (e.g., the first glass surface 310a of FIG. 6) visually exposed to an outside of the housing and an irregular pattern (e.g., the irregular pattern 311 of FIG. 6) formed on the first glass surface, and a reflective layer (e.g., the reflective layer 320 of FIG. 6) disposed on the irregular pattern and formed to correspond to a shape of the irregular pattern, the reflective layer including a first surface (e.g., the first surface 320a of FIG. 6) covering at least a portion of the irregular pattern and a second surface (e.g., the second surface 320b of FIG. 6) facing the outside the housing and spaced apart from the first surface by a designated distance.

According to various embodiments, the reflective layer may include a first reflective layer (e.g., the first reflective layer 321 of FIG. 9) deposited on the glass and a second reflective layer (e.g., the second reflective layer 322 of FIG. 9) deposited on at least a portion of the first reflective layer.

According to various embodiments, the glass may include a first area (e.g., the first area 313 of FIG. 9) where the first reflective layer is positioned and a second area (e.g., the second area 314 of FIG. 9) where the first reflective layer and the second reflective layer are positioned. A refractive index of the first area may be different from a refractive index of the second area.

According to various embodiments, the second reflective layer may include an upper surface portion (e.g., the upper surface portion 322c of FIG. 10) disposed on the first glass surface and a side surface portion (e.g., the upper surface portion 322d of FIG. 10) disposed on the first reflective layer.

According to various embodiments, a material of the first reflective layer may be different from a material of the second reflective layer.

According to various embodiments, the reflective layer may include silicon oxide.

According to various embodiments, the designated distance (e.g., the designated distance d of FIG. 6) between the first surface and the second surface may be 100 nm to 2000 nm.

According to various embodiments, the glass may include a second glass surface (e.g., the second glass surface 310b of FIG. 13A) opposite to the first glass surface and a rear irregular pattern (e.g., the rear irregular pattern 312 of FIG. 13A) formed on the second glass surface.

According to various embodiments, the housing may include a shielding layer (e.g., the shielding layer 350 of FIG. 13A) disposed under the rear irregular pattern.

According to various embodiments, the housing may include a deposition layer (e.g., the deposition layer 360 of FIG. 13C) disposed under the glass (e.g., the +Z direction of FIG. 13A) and disposed under the rear irregular pattern and a shielding layer (e.g., the shielding layer 350 of FIG. 13C) disposed under the deposition layer.

According to various embodiments, the housing may include an adhesive layer (e.g., the adhesive layer 330 of FIG. 6) disposed under the glass, a polymer film (e.g., the polymer film 340 of FIG. 6) disposed under the adhesive layer, and a shielding layer (e.g., the shielding layer 350 of FIG. 6) disposed under the polymer film.

According to various embodiments, the second surface of the reflective layer may have a curved surface formed using a polishing process.

According to various embodiments, the housing may include an anti-fingerprint coating layer (e.g., the anti-fingerprint coating layer 305 of FIG. 6) disposed on the glass.

According to various embodiments, the glass may include a third glass surface (e.g., the third glass surface 310c of FIG. 6) extending from the first glass surface and forming the irregular pattern. The reflective layer may cover at least a portion of the third glass surface.

According to various embodiments, the housing may include a front plate (e.g., the front plate 202 of FIG. 2) and a rear plate (e.g., the rear plate 280 of FIG. 4). The glass may be positioned on the rear plate.

According to various embodiments of the disclosure, a housing (e.g., the housing 300 of FIG. 6) may comprise a glass (e.g., the glass 310 of FIG. 6) including a visually exposed first glass surface (e.g., the first glass surface 310a of FIG. 6) and an irregular pattern (e.g., the irregular pattern 311 of FIG. 6) formed on the first glass surface, and a reflective layer (e.g., the reflective layer 320 of FIG. 6) disposed on the irregular pattern and formed to correspond to a shape of the irregular pattern, the reflective layer including a first surface (e.g., the first surface 320a of FIG. 6) covering at least a portion of the irregular pattern and a second surface (e.g., the second surface 320b of FIG. 6) facing the outside the housing and spaced apart from the first surface by a designated distance (e.g., the designated distance d of FIG. 6).

According to various embodiments of the disclosure, a method for manufacturing a housing (e.g., the housing manufacturing method 1000 of FIG. 8) may comprise preparing a glass (e.g., the glass 310 of FIG. 6) including an irregular pattern (e.g., the irregular pattern 311 of FIG. 6) (e.g., operation 1010 of FIG. 7), depositing a reflective layer (e.g., the reflective layer 320 of FIG. 6) (e.g., operation 1020 of FIG. 7) on the irregular pattern of the glass, and polishing the housing (e.g., operation 1030 of FIG. 7).

It is apparent to one of ordinary skill in the art that a housing and an electronic device including the housing according to the disclosure as described above are not limited to the above-described embodiments and those shown in the drawings, and various changes, modifications, or alterations may be made thereto without departing from the scope of the disclosure.

## Claims

1. An electronic device, comprising:
a housing; and
a processor disposed in the housing, wherein the housing includes:
a glass including a first glass surface visually exposed to an outside of the housing and an irregular pattern formed on the first glass surface; and
a reflective layer disposed on the irregular pattern and formed to correspond to a shape of the irregular pattern, the reflective layer including a first surface covering at least a portion of the irregular pattern and a second surface facing the outside the housing and spaced apart from the first surface by a designated distance.

2. The electronic device of claim 1, wherein the reflective layer includes a first reflective layer deposited on the glass and a second reflective layer deposited on at least a portion of the first reflective layer.

3. The electronic device of claim 2, wherein the glass includes a first area where the first reflective layer is positioned and a second area where the first reflective layer and the second reflective layer are positioned, and
wherein a refractive index of the first area is different from a refractive index of the second area.

4. The electronic device of claim 2, wherein the second reflective layer includes an upper surface portion disposed on the first glass surface and a side surface portion disposed on the first reflective layer.

5. The electronic device of claim 2, wherein a material of the first reflective layer is different from a material of the second reflective layer.

6. The electronic device of claim 1, wherein the reflective layer includes silicon oxide.

7. The electronic device of claim 1, wherein the designated distance between the first surface and the second surface is 100 nm to 2000 nm.

8. The electronic device of claim 1, wherein the glass includes a second glass surface opposite to the first glass surface and a rear irregular pattern formed on the second glass surface.

9. The electronic device of claim 8, wherein the housing includes a shielding layer disposed under the rear irregular pattern.

10. The electronic device of claim 8, wherein the housing includes a deposition layer disposed under the glass and disposed under the rear irregular pattern and a shielding layer disposed under the deposition layer.

11. The electronic device of claim 1, wherein the housing includes:
an adhesive layer disposed under the glass;
a polymer film disposed under the adhesive layer; and
a shielding layer disposed under the polymer film.

12. The electronic device of claim 1, wherein the second surface of the reflective layer has a curved surface formed using a polishing process.

13. The electronic device of claim 1, wherein the housing includes an anti-fingerprint coating layer disposed on the glass.

14. The electronic device of claim 1, wherein the glass includes a third glass surface extending from the first glass surface and forming the irregular pattern, and
wherein the reflective layer covers at least a portion of the third glass surface.

15. The electronic device of claim 1, wherein the housing is manufactured by a manufacturing method comprising:
preparing the glass including the irregular pattern;
depositing the reflective layer on the irregular pattern of the glass; and
polishing the housing.
